# EUROPEAN PATENT SPECIFICATION

(11) **EP 3 612 497 B1**
(45) Date of publication and mention of the grant of the patent: **05.06.2024**
(21) Application number: 17906310.2
(22) Date of filing: 21.04.2017
(51) Int. Cl.: C02F 3/00, C02F 3/12, C02F 3/06, B01D 61/00, B01D 61/14

(54) **METHODS FOR UPGRADING CONVENTIONAL ACTIVATED SLUDGE PLANTS**
VERFAHREN ZUR AUFRÜSTUNG VON KONVENTIONELLEN BELEBUNGSANLAGEN
PROCÉDÉS DE MISE À NIVEAU D'INSTALLATIONS CLASSIQUES À BOUES ACTIVÉES

(43) Date of publication of application: 26.02.2020
(73) Proprietor: BL Technologies, Inc., Minnetonka, MN 55343 (US)
(72) Inventor: COTE, Pierre Lucien, Dundas, Ontario L9H 3M6 (CA)
(74) Representative: Hamer, Christopher K.
(86) International application number: PCT/US2017/029008
(87) International publication number: WO 2018/194690

(56) References cited:
- WO-A2-2015/142586
- US-A1- 2007 051 677
- US-A1- 2007 163 959
- US-A1- 2011 174 709
- US-B2- 7 344 643
- YANG et al.: "Occurrence and removal of pharmaceuticals and personal care products (PPCPs) in an advanced wastewater reclamation plant", Water Research, vol. 45, no. 16, 15 October 2011 (2011-10-15), pages 5218-5228, XP028282160,
- "Membrane Bioreactor", Proteus Waters - Technical Information, 26 December 2014 (2014-12-26), XP055547129, Retrieved from the Internet: URL:http://www.proteuswaters.com/info.html [retrieved on 2017-06-30]
- Côté P. et al.: "Comparison of Membrane Options for Water Reuse and Reclamation", IDS 6th Annual Conf."Upgrading Groundwater and Recycled Water by Desalination, 16 December 2003 (2003-12-16), pages 103-117, XP055547133, Retrieved from the Internet: URL:http://gwri-ic.technion.ac.il/main.php ?location=biblio&action=biblio_hit&id=1911 8&lib=0 [retrieved on 2017-06-30]

## Description

### FIELD

This specification relates to methods of upgrading a conventional activated sludge (CAS) plant and of treating wastewater such as sewage or industrial wastewater using an activated sludge process.

### BACKGROUND

The activated sludge process is a biological treatment process that is standard practice in many countries of the world. In a conventional activated sludge wastewater treatment plant (WWTP), wastewater passes through one or more biological process tanks maintained under various states of oxidation and mixing. Organisms grow in suspension in the process tanks. The combination of wastewater and organisms is called mixed liquor. The mixed liquor is separated in a secondary clarifier to produce a treated effluent and activated sludge. A portion of the activated sludge (return activated sludge or RAS) is recycled to one or more of the process tanks. Another portion of the activated sludge (waste activated sludge or WAS) is wasted. The recycle of activate sludge causes the retention time of the organisms to be greater than the hydraulic retention time of the plant. The mixed liquor suspended solids (MLSS) concentration is typically less than 4000 mg/L. Optionally the wastewater passes through a primary clarifier before being treated in the process tanks. The primary clarifier produces primary sludge and primary effluent. The primary effluent flows to the process tanks. US2011174709A1 discloses a wastewater treatment plant of the prior art.

### INTRODUCTION

According to an aspect of the invention, there is provided a method of upgrading a conventional activated sludge (CAS) plant (10) and of treating wastewater, wherein said CAS plant (10) comprises one or more biological process tanks (14) and a secondary clarifier (16), said method comprising the steps of:
(1) adding a membrane filtration unit (44, 54) to the CAS plant (10);
(2) passing wastewater through the one or more biological process tanks (14) and biologically treating the wastewater to produce a mixed liquor;
(3) separating a first portion of an effluent from the mixed liquor through the filtration membrane of the membrane filtration unit (44, 54); and
(4) separating a second portion of an effluent from the mixed liquor through the secondary clarifier (16);
wherein the first portion is up to 25% of the combined first portion and second portion, and further wherein the mixed liquor suspended solids concentration is 4000 mg/L or less. Embodiments of the process of the invention are as described in the appended claims. The upgraded plant may produce effluent of a higher quality or treat wastewater at a higher rate or both. The various systems and methods described herein can be used individual or in any combination of two or more of them.

In the process of the invention, a membrane filtration unit is added between the process tanks and the secondary clarifier. At that point, biological treatment is essentially complete, or at least essentially as complete as it will be in the secondary clarifier. The membrane filtration unit extracts treated effluent from the mixed liquor before secondary clarification. The treated effluent extracted through the membrane filtration unit may be mixed with the treated effluent from the secondary clarifier. Extracting treated effluent as permeate from the membrane filtration unit reduces the hydraulic loading rate, or both the hydraulic and solids loading rates, of the secondary clarifier depending on whether solids rejected by the membrane are sent to the secondary clarifier or to the return activated sludge (RAS) line. The amount of treated effluent extracted by membrane filtration is up to25% of the influent flow rate. The plant is not converted into a membrane bioreactor (MBR) as the system is run under CAS operating conditions (e.g., MLSS < 4,000 mg/L).

A membrane-aerated biofilm reactor (MABR) unit may be added to the plant, for example by being immersed in a process tank. The MABR unit adds biological treatment by attached growth to the conventional suspended growth.

One or more screens, for example micro-screens, may be added to extract solids from water flowing in or to the process tanks. In one option, a micro-screen is added in parallel with a primary clarifier. In another option, a portion of the RAS is screened before being returned to the process tanks. Using either or both of these methods reduces the solids loading of the process tanks.

When used in combination, the units described above and their corresponding processes increase the capacity of the primary separation, biological processing and secondary separation functions of the plant. The influent flow rate to the plant may be increased.

### BRIEF DESCRIPTION OF THE FIGURES

Figure 1 is a schematic process flow diagram of a conventional activated sludge plant according to prior art.
Figure 2a is a schematic process flow diagram of a conventional activated sludge plant upgraded with primary micro-sieving. The disclosed process is not according to the invention.
Figure 2b is a schematic process flow diagram of a conventional activated sludge plant upgraded with side stream screening. The disclosed process is not according to the invention.
Figure 3 is a schematic process flow diagram of a conventional activated sludge plant upgraded with MABR membranes. The disclosed process is not according to the invention.
Figure 4A is a schematic process flow diagram of a conventional activated sludge plant upgraded with membrane filtration with membranes outside of the biological reactor.
Figure 4B is a schematic process flow diagram of a conventional activated sludge plant upgraded with membrane filtration with membranes inside the biological reactor.

### DETAILED DESCRIPTION

Conventional activated sludge (CAS) is a common wastewater biological treatment process. A CAS typically has three treatment steps although the primary treatment step described below can optionally be omitted. Pre-treatment removes larger particles with mechanical means such as coarse screening, grit removal and oil & grease flotation. Primary treatment, typically in a clarifier, removes suspended solids including some organic matter by physical separation. One or more biological reactors removing organic matter (e.g., COD/BOD) using microorganisms, typically under aerobic conditions in at least one reactor. The biological reactors may also include multiple zones or tanks, optionally with one or more recycle loops between them, where the environmental conditions are controlled (i.e between aerobic, anoxic and anaerobic conditions) to favor different biological pathways to remove nutrients such as nitrogen and phosphorous. Secondary treatment, typically in a clarifier, separates the mixed liquor suspended solids (MLSS) from the final effluent, recycles a portion as return activated sludge (RAS) and wastes a portion (WAS) to control the sludge retention time (SRT).

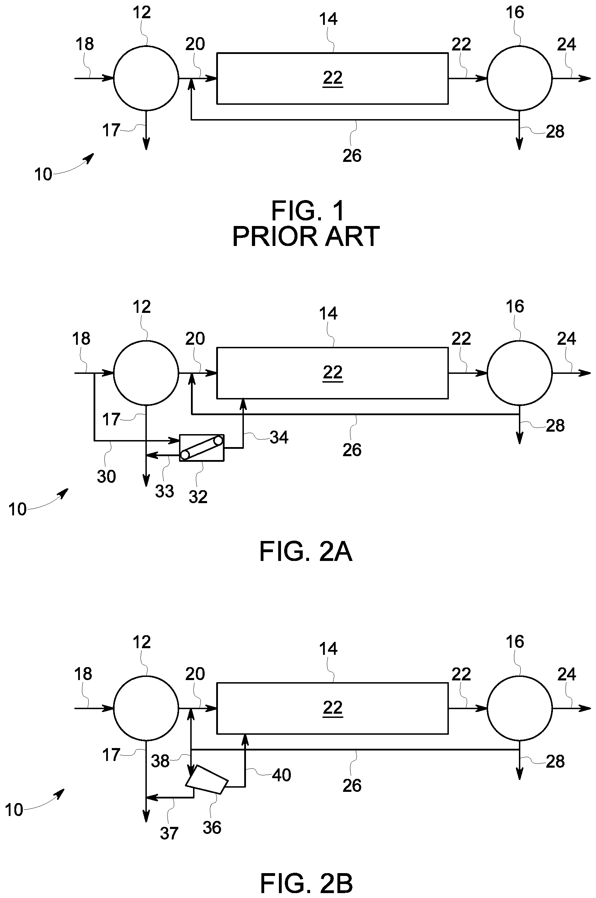

The wastewater treatment plant (WWTP) 10 shown in Figure 1 is an example of a conventional CAS plant. The treatment units include a primary clarifier 12, a process tank 14 and a secondary clarifier 16. Although only one process tank 14 is shown, there could optionally be multiple process tanks or other forms of biological reactors. When there is only one process tank 14 it is typically aerated to provide suspended growth under aerobic conditions. Influent wastewater 18, optionally pre-treated, flows into primary clarifier 12. Primary sludge 17 is separated from primary effluent 20. Primary effluent 20 flows into process tank 14 and becomes part of the mixed liquor 22 therein. Mixed liquor 22 also flows to secondary clarifier 16 where it is separated into activated sludge and treated effluent 24. Optionally, waste activated sludge (WAS) 28 leaves the plant 10. Return activated sludge (RAS) 26 is recycled to the process tank 14.

CAS plants often need to be upgraded or expanded. Upgrading is needed when the treatment objectives or effluent regulations become more stringent and the level of treatment achieved by the plant is not sufficient. Expansion is needed when the flow rate and/or pollutant concentration of the influent wastewater increases. Upgrading and expanding a CAS plant can be complex and expensive as it involves adding tankage and mechanical equipment. In many cases, the CAS plant is located at a site where there is very little room available.

A method of upgrading a CAS plant can involve adding one or more products to the CAS plant. These products target the three treatment steps (primary separation, biological treatment, secondary separation) described above. They can be used individually or in combinations of two or more of together. One type of product involves a micro-screen, alternatively called a micro-sieve, or other screen, which may be added to complement primary treatment, to otherwise reduce solids in the process tanks, or to protect added membranes from solids. Another type of product involves a medium to support attached growth, for example a membrane aerated biofilm module, to complement the biological reactor. Another type of product that is always present in processes of the invention involves membrane filtration to complement secondary clarification. The primary clarifier in the examples described below is optional.

Micro-sieving, side-stream screening, MABR, and membrane filtration are described in other contexts in, for example, US Patents 6,942,786; 6,814,868; and, 6,645,374. In this specification they are used to upgrade or expand a CAS plant.

In one example, use of a micro-sieving product involves installing a micro- sieve in parallel with primary treatment to remove suspended solids. In the specific embodiment depicted in Figure 2A, which is not according to the invention, a rotating belt sieve (RBS) 32 such as the LEAP PRIMARY RBS by GE Water is added but other configurations of micro-screens such as rotating drums or discs can be used. A micro-screen optionally has pores of about 300 microns or less, or about 200 microns or less, or about 100 microns or less. A portion 30 of influent wastewater 18 is diverted to the RBS 32. Micro-sieve sludge 33, containing solids rejected by the RBS 32, can be added to primary sludge 17. RBS effluent 34 flows to the process tank 14. A parallel micro-sieve can be run continuously, or only during peak periods to increase the hydraulic capacity of primary treatment. A parallel micro-sieve can alternatively facilitate adding chemically enhanced primary treatment, i.e. with phosphorous precipitating chemicals or polymers added to the influent wastewater 18, by countering the solids increase to the primary clarifier 12 that this would otherwise cause by diverting some of influent wastewater 18 from the primary clarifier 12.

In another example, a micro-screen or other screen is used to extract solids from mixed liquor or RAS. Removing these solids may supplement primary treatment or provide a substitute for primary treatment if the plant has none. Alternatively or additionally, screening of the mixed liquor or RAS may remove trash and larger particles from the mixed liquor to protect membranes in, or added to, the plant. The screen optionally has pores of about 300 microns or less, or about 200 microns or less, or about 100 microns or less. In a case where only the membrane protection function is required, the screen can optionally have pores up to 1000 microns in size. In the specific embodiment depicted in Figure 2B, which is not according to the invention, a portion 38 of RAS 26 is diverted to a rotating drum screen 36. Solids 37 rejected by the screen 36 can be mixed with the primary sludge 17. Filtrate 40 flows to the process tank 14. This version of primary treatment upgrading or expansion is useful, for example, in conjunction with one or both of the two other types of product involving biofilm-supporting or filtering membranes if it is necessary to lower the trash contents of the mixed liquor to inhibit damage to membrane modules.

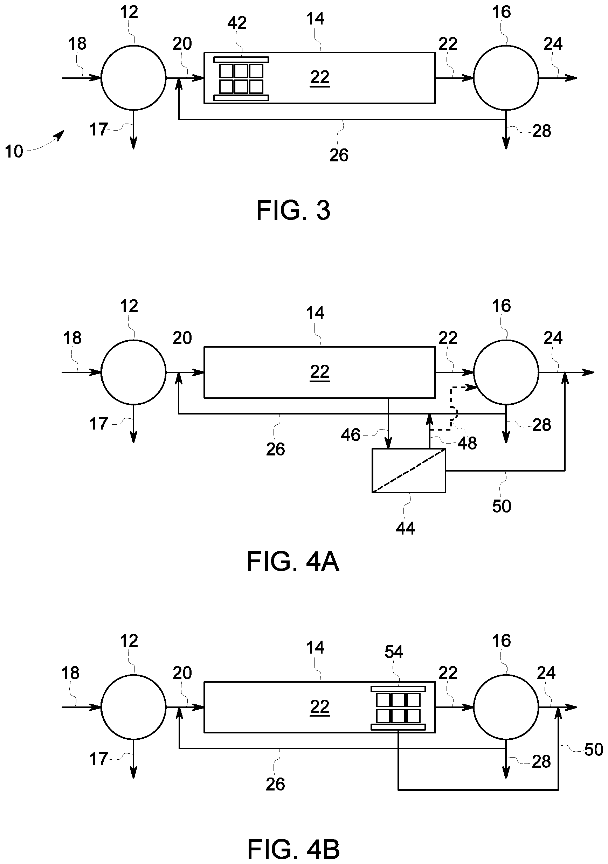

Adding a supported biomass medium augments the biological treatment capacity of a plant 10. In the specific embodiment depicted in Figure 3, which is not according to the invention, a membrane aerated biofilm module (MABR) module 42 such as a ZEELUNG module by GE Water is immersed into the process tank 14. MABR modules provide additional nitrification and BOD removal capacity. In the example shown, the MABR module 42 is immersed into an anoxic zone at the front-end of process tank 14. Process tank 14 is aerobic downstream of the MABR module 42.

A membrane filtration product is used to extract treated effluent from the mixed liquor. One example of a membrane filtration product is a ZEEWEED immersed ultrafiltration (UF) or microfiltration (MF) module by GE Water. In the example of Figure 4A, a membrane tank 44 is located outside of the process tank 14 and contains either immersed membranes in an open tank or membranes contained in a sealed tank. A portion 46 of mixed liquor 22 is pumped out of the end portion of the process tank 14 (where biological conversion is substantially complete), or the conduit between the process tank 14 and secondary clarifier 16, and processed through MF/UF membranes. Rejects 48 can be mixed with the RAS 26 or WAS 28. Adding membrane filtration in this way reduces both the hydraulic and solids loading rates to the secondary clarifier 16. Alternatively, some or all of rejects 48 can flow to secondary clarifier 16, which reduces the hydraulic loading to the secondary clarifier 16 but only reduces the solids loading to the secondary clarifier 16 to the extent that some of the rejects 48, if any, are mixed with RAS 26 or WAS 28. Permeate 50 can be mixed with treated effluent 24.

In the example of Figure 4B, a membrane module 54 is immersed directly in mixed liquor 22 of process tank 14. This avoids mixed liquor pumping and the need for additional tankage. In this case, the mixed liquor may be only slightly concentrated and flows to the secondary clarifiers. In this embodiment, adding membrane filtration only reduces the hydraulic loading rate to the secondary clarifiers.

In Figures 4A and 4B the permeate 50 is mixed with treated effluent 24 and improves the overall quality of the discharged effluent. Optionally, in either example, permeate 50 can be kept separate from treated effluent 24. Since the permeate 50 is of higher quality, it can be reused directly (e.g., for irrigation) or treated further with reverse osmosis for other types of reuse (e.g., groundwater recharge).

Adding filtration membranes to process a minor portion of the mixed liquor 22 does not convert the CAS plant into a membrane bioreactor (MBR). The fraction of the influent flow rate (Q) extracted as permeate 50 is limited to 25% (or one third of treated effluent 24 discharged from secondary clarifier 16). The MLSS concentration of the mixed liquor 22 is optionally not increased or at least not materially increased. The MLSS concentration of the modified plant is about 2,000 to 4,000 mg/L, which is typical of a CAS, rather than 6,000 to 12,000 mg/L which is typical of an MBR.

Two or all three of the types of products can be combined to improve the use of existing infrastructure. While each existing CAS plant may be limited differently, it may be possible to address each limitation to increase plant throughput by up to 25%. Optionally, the products can be installed without materially interrupting the operation of the CAS plant. Both the MABR and filtration membranes can be deployed as floating cassettes.

## Claims

1. A method of upgrading a conventional activated sludge (CAS) plant (10) and of treating wastewater, wherein said CAS plant (10) comprises one or more biological process tanks (14) and a secondary clarifier (16), said method comprising the steps of:
(1) adding a membrane filtration unit (44, 54) to the CAS plant (10);
(2) passing wastewater through the one or more biological process tanks (14) and biologically treating the wastewater to produce a mixed liquor;
(3) separating a first portion of an effluent from the mixed liquor through the filtration membrane of the membrane filtration unit (44, 54); and
(4) separating a second portion of an effluent from the mixed liquor through the secondary clarifier (16);
wherein the first portion is up to 25% of the combined first portion and second portion, and further wherein the mixed liquor suspended solids concentration is 4000 mg/L or less.

2. The method of Claim 1, wherein solids separated by the filtration membrane remain in the mixed liquor or flow to the secondary clarifier (16).

3. The method of Claim 1, wherein solids separated by the filtration membrane are mixed with return activated sludge (26).

4. The method of any of claims 1 to 3 comprising screening influent in parallel with a primary clarifier (12).

5. The method of any of claims 1 to 4 comprising screening return activated sludge (26).

## Patentansprüche

1. Verfahren zur Aufrüstung einer konventionellen Belebungsanlage (CAS-Anlage) (10) und zur Behandlung von Abwasser, wobei die besagte CAS-Anlage (10) einen oder mehrere biologische Prozesstanks (14) und ein sekundäres Klärbecken (16) umfasst, wobei das besagte Verfahren die Schritte umfasst:
(1) Hinzufügen einer Membranfiltrationseinheit (44, 54) zu der CAS-Anlage (10);
(2) Leiten von Abwasser durch den einen oder die mehreren biologischen Prozesstanks (14) und biologisches Behandeln des Abwassers, um eine Mischflüssigkeit zu produzieren;
(3) Trennen eines ersten Teils eines Ablaufs von der Mischflüssigkeit durch die Filtrationsmembran der Membranfiltrationseinheit (44, 54) und
(4) Trennen eines zweiten Teils eines Ablaufs von der Mischflüssigkeit durch das sekundäre Klärbecken (16);
wobei der erste Teil bis zu 25% des kombinierten ersten Teils und zweiten Teils ausmacht und weiterhin wobei die Schwebstoffkonzentration der Mischflüssigkeit 4000 mg/L oder weniger ausmacht.

2. Verfahren nach Anspruch 1, wobei Schwebstoffe, die durch die Filtrationsmembran getrennt werden, in der Mischflüssigkeit bleiben oder zu dem sekundären Klärbecken (16) strömen.

3. Verfahren nach Anspruch 1, wobei Schwebstoffe, die durch die Filtrationsmembran getrennt werden, mit Rücklaufschlamm (26) gemischt werden.

4. Verfahren nach einem der Ansprüche 1 bis 3, umfassend ein paralleles Sieben von Zulauf mit einem primären Klärbecken (12).

5. Verfahren nach einem der Ansprüche 1 bis 4, umfassend ein Sieben von Rücklaufschlamm (26).

## Revendications

1. Procédé de valorisation d'une usine conventionnelle de boues activées (CBA) (10) et de traitement des eaux usées, dans lequel ladite usine CBA (10) comprend une ou plusieurs cuves de processus biologique (14) et un clarificateur secondaire (16), ledit procédé comprenant les étapes suivantes:
(1) ajout d'une unité de filtration sur membrane (44, 54) à l'usine CBA (10);
(2) passage d'eaux usées à travers les une ou plusieurs cuves de processus biologique (14) et traitement biologique des eaux usées pour produire une liqueur mixte;
(3) séparation d'une première partie d'un effluent de la liqueur mixte à travers la membrane de filtration de l'unité de filtration sur membrane (44, 54); et
(4) séparation d'une deuxième partie d'un effluent de la liqueur mixte à travers le clarificateur secondaire (16);
dans lequel la première partie représente jusqu'à 25% de la première partie et de la deuxième partie combinées, et en outre dans lequel la concentration des solides en suspension dans la liqueur mixte est de 4000 mg/L ou moins.

2. Procédé selon la revendication 1, dans lequel des solides séparés par la membrane de filtration restent dans la liqueur mixte ou s'écoulent vers le clarificateur secondaire (16).

3. Procédé selon la revendication 1, dans lequel des solides séparés par la membrane de filtration sont mélangés avec des boues activées de retour (26).

4. Procédé selon l'une quelconque des revendications 1 à 3 comprenant le criblage d'influent en parallèle avec un clarificateur primaire (12).

5. Procédé selon l'une quelconque des revendications 1 à 4 comprenant le criblage de boues activées de retour (26).
